# FASCICULE DE BREVET EUROPEEN

(11) **EP 1 911 936 B1**
(45) Date de publication et mention de la délivrance du brevet: **08.07.2009**
(21) Numéro de dépôt: 07117660.6
(22) Date de dépôt: 01.10.2007
(51) Int. Cl.: F01D 9/04

(54) **Canal de transition entre deux étages de turbine**
Übergangskanal zwischen zwei Turbinenstufen
Transition channel between two turbine stages

(30) Priorité: 06.10.2006 FR 0654139
(43) Date de publication de la demande: 16.04.2008
(73) Titulaire: SNECMA, 75015 Paris (FR)
(72) Inventeur: Guimbart, Jean-Michel, 77930, CELY EN BRIE (FR); Pabion, Philippe, 77000, VAUX LE PENIL (FR); Schwartz, Eric, 77240, SEINE PORT (FR); Soupizon, Jean-Luc, 77000, VAUX LE PENIL (FR)
(74) Mandataire: David, Daniel

(56) Documents cités:
- FR-A1- 2 423 638
- GB-A- 1 386 281
- US-A1- 2003 002 975
- US-A1- 2005 279 100

## Description

La présente invention concerne le domaine des moteurs à turbine à gaz et vise en particulier un canal de transition entre deux étages de turbine.

Un moteur à turbine à gaz à corps multiples comprend des ensembles tournant indépendamment les uns des autres généralement autour d'un même axe. Par exemple un moteur à double corps comprend deux ensembles, l'un dit haute pression et l'autre basse pression. Le corps haute pression est composé d'un compresseur et d'une turbine montés sur un même arbre. Le compresseur haute pression alimente en air la chambre de combustion qui elle-même délivre les gaz de combustion à la turbine haute pression. Le corps basse pression comprend une turbine basse pression recevant à travers un canal dit de transition et le cas échéant un distributeur les gaz ayant subi une première détente dans la turbine haute pression.

L'un des moyens pour augmenter le rendement de la turbine basse pression consiste à diminuer la charge aérodynamique par une augmentation du rayon moyen de cette dernière. Le rayon de la turbine haute pression restant inchangé, Il s'ensuit que la géométrie du canal de transition entre la turbine haute pression, HP, et la turbine basse pression, BP, est à adapter en conséquence entre sa section d'admission des gaz provenant de la turbine haute pression et sa section de sortie débouchant dans le distributeur d'alimentation de la turbine basse pression. Pour les moteurs aéronautiques, en raison des contraintes d'encombrement et de masse, il n'est pas opportun d'allonger le canal de transition ; il s'ensuit que les parois de ce dernier doivent présenter de fortes pentes et ménager une diffusion importante. Une limite est cependant imposée par la qualité de l'écoulement aux parois qu'il s'agit de conserver ; Il faut éviter l'épaississement voir le décollement de la couche limite.

Si on dépasse les limites de pente et de diffusion dans le col de cygne formé par le canal de transition, il se produit des décollements de la couche limite qui sont un facteur défavorable pour les performances de la turbine. Cela annulerait le gain apporté par l'augmentation du rayon moyen de la turbine basse pression.

Pour remédier à ce problème une solution consiste à ré-énergiser la couche limite aux parois pour éviter les décollements de couche limite, par injection d'un débit de fluide dans la couche limite.

Une telle solution permet donc l'adoption d'un canal de transition de la turbine HP à la turbine BP :
- à forte pente pour augmenter le rayon moyen de la turbine et donc le rendement
- à forte diffusion pour diminuer les pertes générées par le distributeur de la turbine base pression et donc augmenter le rendement de la turbine BP.
Cette solution convient pour tout canal de transition entre deux sections de turbines, pas seulement entre la section HP et la section BP immédiatement aval.

La demande de brevet US2005/0279100 décrit un tel canal de transition inter turbine pourvu d'un moyen de soufflage de fluide. Un conduit de prélèvement de gaz est ménagé dans la veine en amont de la turbine haute pression. Ce conduit bipasse la turbine haute pression et débouche en aval de celle-ci sensiblement parallèlement à la paroi extérieure du canal de transition, dans la zone où le décollement de la couche limite est susceptible de se produire. Comme cela est mentionné dans ce document, l'injection de fluide permet la réalisation d'un canal dont la paroi extérieure présente une forte pente.

En raison des contraintes thermiques et mécaniques la réalisation de l'injection de fluide dans le canal de transition présente cependant des difficultés de mise en oeuvre.

La présente invention a pour objet un mode de réalisation de structure du canal de transition permettant une injection efficace du fluide de recollement de couche limite.

Conformément à l'invention le canal de transition entre une première section de turbine et une deuxième section de turbine pour moteur à turbine à gaz, comprenant une première paroi radialement extérieure annulaire, une seconde paroi radialement intérieure annulaire, la première paroi comprenant des orifices, sous la forme de fentes, trous ou autres, d'injection d'un fluide à l'intérieur du canal pour en ré-énergiser la couche limite, est caractérisé par le fait que la première paroi est constituée d'éléments en secteurs d'anneau logés à l'intérieur d'une virole annulaire, la virole ménageant avec un élément de carter de turbine extérieur à la virole une cavité de distribution de fluide, des moyens d'alimentation en fluide, avec guidage sans fuite dudit fluide, étant ménagés entre la dite cavité de distribution de fluide et les dits orifices d'injection.

Conformément à un premier mode de réalisation, les moyens d'alimentation comprennent des ouvertures ménagées dans la virole annulaire, des cavités ménagées dans les secteurs d'anneau et communiquant avec les orifices d'injection, et des tubes de liaison rapportés entre les dites ouvertures et les dites cavités.

Conformément à un autre mode de réalisation, les moyens d'alimentation comprennent des ouvertures ménagées dans la virole annulaire, des cavités ménagées dans les secteurs d'anneau et communiquant avec les orifices d'injection, et un canal annulaire, délimité par des joints annulaires d'étanchéité, ménagé entre les ouvertures et les cavités et les mettant en communication.

Conformément à un autre mode de réalisation, les orifices d'injection de fluide dans les éléments en secteurs d'anneau sont obtenus par usinage des secteurs d'anneau.

Conformément à un autre mode de réalisation les orifices d'injection de fluide sont définis entre des ouvertures usinées dans les secteurs et des éléments de guide rapportés sur les secteurs.

Avantageusement, conformément à un mode de réalisation particulier, les orifices d'injection sont agencés pour imprimer une composante de vitesse tangentielle au fluide.

L'invention porte également sur un moteur à turbine à gaz comprenant une première section de turbine et une deuxième section de turbine reliées par un canal de transition, dont la virole ménage avec un élément de carter de turbine une cavité de distribution de fluide, ledit élément de carter comprenant un orifice d'alimentation en fluide communiquant avec une zone de prélèvement en amont du canal de transition. Le prélèvement est effectué de préférence au niveau du compresseur de façon que l'air injecté forme un film de protection de la paroi.

Plus particulièrement, les secteurs d'anneau formant la paroi radialement extérieure annulaire du canal de transition sont rapportés sur les éléments formant le distributeur en entrée de la deuxième section de turbine. Selon un mode de réalisation les secteurs d'anneau constituent des pièces monoblocs avec les éléments du distributeur.

On décrit maintenant plus en détail l'invention en référence aux dessins annexés sur lesquels :
la figure 1 montre en demi coupe axiale la section turbine d'un moteur à turbine à gaz de l'art antérieur avec une première turbine, une deuxième turbine et un canal de transition,
la figure 2 est une vue partielle de la partie radialement extérieure du canal de transition présente l'agencement selon un premier mode de réalisation de l'invention,
la figure 3 montre une vue partielle de la partie radialement extérieure du canal de transition avec un agencement selon un autre mode de réalisation.

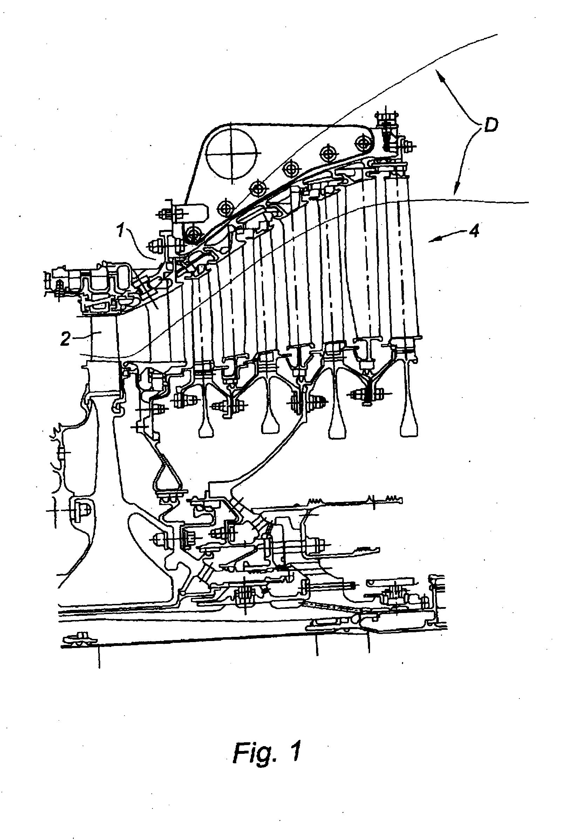

On voit sur la figure 1, un exemple d'architecture de l'art antérieur des sections de turbine d'un moteur à turbine à gaz. Le carter 1 loge un premier rotor de turbine 2. Ici, il s'agit de la turbine haute pression du moteur. Cette turbine est solidaire d'un premier arbre. Une deuxième turbine 4, ici basse pression, reçoit les gaz ayant subi une première détente dans la turbine 2. La détente est fractionnée entre plusieurs étages, montés sur un seul rotor. Celui-ci est solidaire d'un arbre coaxial au premier et indépendant de celui-ci. Un canal de transition 6 est ménagé entre les deux sections, plus précisément entre le rotor de la turbine haute pression et le distributeur d'entrée de la turbine basse pression. En raison de la détente des gaz entre l'entrée de l'étage haute pression et la sortie de la section basse pression, le volume augmente et le diamètre moyen aussi. Toutefois cette augmentation reste compatible avec les conditions d'écoulement non perturbé.

Dans le cadre des études pour augmenter le rendement de turbine basse pression, le profil du canal aérodynamique est optimisé. Parmi ces optimisations on retient l'augmentation de la pente en entrée de turbine basse pression dans le canal de transition qui permet un accroissement rapide du rayon moyen de la turbine basse pression. De plus cette augmentation de section en entrée de distributeur basse pression générée par une plus forte diffusion dans le canal, engendre une augmentation de performances sur le premier étage avec une meilleure accélération dans le distributeur. On a représenté en traits fins (D) sur la figure 1 les contours d'un tel profil optimisé.

Toutefois une forte pente en entrée de turbine basse pression crée des risques de décollements de la couche limite le long de la paroi extérieure du flux principal issu de la turbine haute pression. Ces décollements altèrent fortement la performance de la turbine BP.

Dans la solution proposée, un flux de gaz significatif est injecté à la sortie de la turbine haute pression au niveau de la paroi afin de le maintenir à la paroi. Cette injection d'air est communément appelée soufflage.

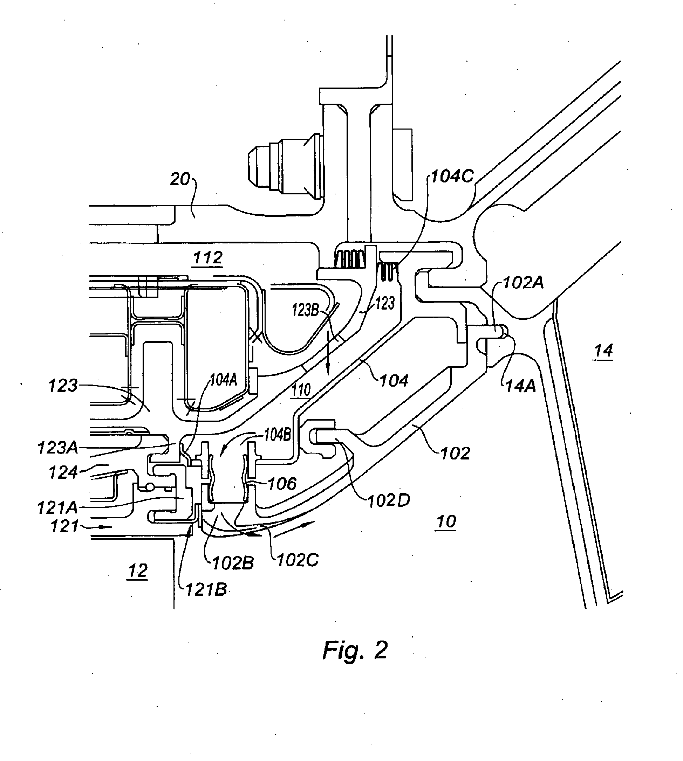

La figure 2 représente l'intégration technologique du soufflage objet de l'invention dans un exemple d'environnement moteur. La figure montre une partie en coupe axiale du canal de transition 10. Ce canal 10 est situé entre la turbine HP 12 dont on voit une partie d'aube et le distributeur 14 d'entrée de la section de turbine BP dont on voit une partie d'aube également. L'aubage de la turbine HP 12 est mobile à l'intérieur d'un canal annulaire défini extérieurement par rapport à l'axe du moteur par un anneau d'étanchéité 121. Cet anneau est fixé dans un élément de carter 123 interne, dit carter de turbine HP. Ce carter est lui-même monté dans le carter extérieur 20. L'anneau de turbine 121 est formé d'une pluralité de secteurs annulaires et est retenu dans l'élément de carter 123 par l'intermédiaire d'une pièce intercalaire 124 au moyen de pinces 121A.

Le canal de transition 10 annulaire est défini entre une première paroi radialement extérieure 102 et une seconde paroi radialement intérieure non représentée sur la figure 2. La première paroi 102 est formée de plateformes en secteurs d'anneau s'étendant axialement entre l'anneau de turbine 121 HP et le distributeur 14 du premier étage de la turbine BP. En coupe axiale comme on le voit sur la figure 2, en aval la première paroi 102 est fixée solidaire du distributeur 14 par une liaison languette 102A dans une rainure 14A. En amont, la première paroi 102 est en appui contre l'anneau d'étanchéité 121 par l'intermédiaire d'un joint 121B. Des cavités 102B sont ménagées à l'amont de la paroi. Ces cavités 102B sont ouvertes radialement vers l'extérieur, par rapport à l'axe de la machine. Elles communiquent avec des orifices d'injection 102C qui débouchent dans le canal de transition 10. Les orifices d'injection 102C sont orientés sensiblement parallèlement à la surface de la paroi 102. Dans la mesure où le flux gazeux issu de la turbine HP comprend une composante tangentielle dans le plan transversal par rapport à l'axe du moteur, il est avantageux de donner à ces orifices une orientation également tangentielle dans le plan transversal.

La paroi 102 est contenue dans une virole annulaire 104 de même axe que celui du canal, de forme sensiblement tronconique. Cette virole 104, en tôle notamment, s'étend axialement entre l'anneau d'étanchéité 121 et le distributeur. Plus précisément en amont la virole est en appui par l'intermédiaire d'un joint d'étanchéité 104A contre une bride radiale 123A du carter de turbine HP 123 qui est à proximité du bord de l'anneau 121 ou comme ici dans le même plan transversal que celui-ci. En aval, la virole 104 est maintenue par une attache à languette et rainure, solidaire du carter HP 123. Une bride axiale 102D forme un appui pour la virole 104.

La virole 104 comprend des ouvertures 104B radiales communiquant avec les cavités 102B de la première paroi par l'intermédiaire de tubes de liaison rapportés 106. Ces tubes cylindriques présentent à leurs extrémités des surfaces à section axiale en arc de cercle coopérant avec les parois des ouvertures 104B d'une part et des cavités 102B. Les diamètres sont ajustés de manière à former un contact étanche entre les tubes et les parois cylindriques des ouvertures 104B et des cavités 102B. Le fluide gazeux est guidé à travers le tube de liaison sans fuite. Un mouvement de rotation limité des tubes dans leurs logements est ainsi autorisé de façon à ne pas immobiliser la première paroi par rapport à la virole.

La virole 104 ménage un espace annulaire 110 avec la paroi du carter de turbine 123 en aval de la bride radiale 123A. Un joint d'étanchéité 104C assure l'étanchéité en aval entre la virole 104 et la paroi 123 du carter. Des orifices 123B ménagés dans la paroi du carter de turbine 123 mettent en communication l'espace 110 avec un canal d'alimentation en fluide 112. Ainsi l'espace annulaire 110 est délimité entre la virole 104, le carter 123 et les joints d'étanchéité 104A et 104C.

En fonctionnement du moteur, le fluide gazeux est guidé du canal 112 dans l'espace 110 à travers les orifices 123B, puis de l'espace 110 dans les cavités 102B de la première paroi du canal 102 d'où il est injecté dans le canal 10 à travers les orifices d'injection 102C pour ré-énergiser la couche limite sur la paroi 102.

Le canal 112 communique avec une zone située en amont de la turbine HP et qui est à une pression supérieure de celle régnant dans le canal de transition 10. En choisissant de prélever le fluide au compresseur par exemple, on peut assurer une fonction supplémentaire de protection thermique de la paroi.

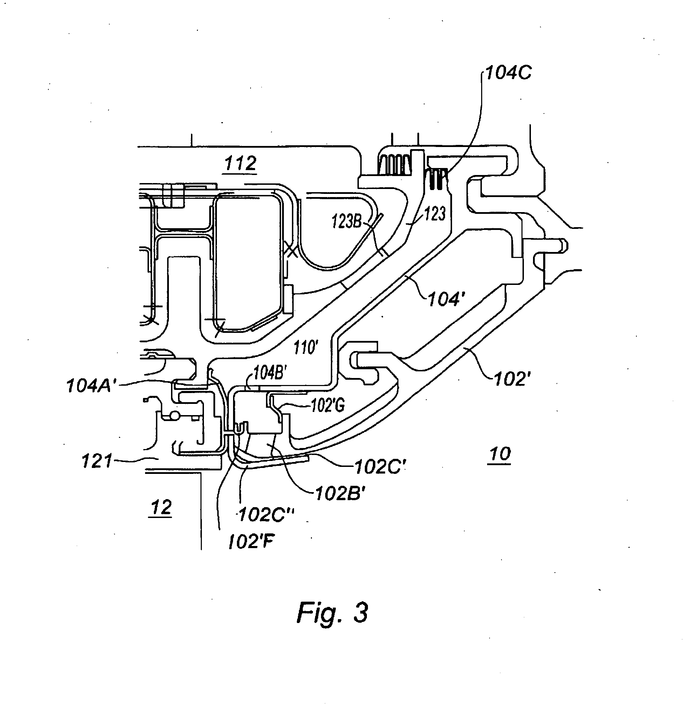

On décrit une variante de réalisation en relation avec la figure 3. Les parties qui ont été simplement modifiées par rapport à la description relative à la réalisation de la figure 2 portent la même référence mais primée. Dans ce mode de réalisation, on a remplacé les tubes de liaison par un conduit ménagé par des joints d'étanchéité.

L'espace 110' est défini entre l'élément de carter de turbine 123, la virole 104' et deux joints d'étanchéité l'un amont 104A' et l'autre aval 104C. La virole 104' est percée, en amont, d'orifices 104B' communiquant avec des cavités radiales 102B' ménagées dans la première paroi 102'. Des joints d'étanchéité 102'F et 102'G assurent un écoulement gazeux entre les ouvertures 104B' et les cavités 102B' sans fuite. Le joint d'étanchéité 102'F est ici de forme torique il est logé entre la virole et une bride radiale ménagée sur le secteur d'anneau formant la première paroi. Le joint d'étanchéité 102'G est en forme de tôle solidaire de la virole 104' et s'appuyant élastiquement contre une bride radiale du secteur d'anneau formant la paroi 102'.

Les cavités 102B' communiquent avec des orifices d'injection 102C' dans le canal 10 ; selon ce mode de réalisation les orifices 102C' sont ménagés par un guide 102C" rapporté sur la première paroi. Les cavités 102B' sont traversantes et partiellement fermées par le guide 102". Comme dans le mode de réalisation précédent, les orifices d'injection sont avantageusement orientés avec une composante tangentielle dans le plan transversal à l'axe du moteur.

Le fonctionnement est le même que dans le cas précédent.

La solution de l'invention permet par la virole d'isoler les secteurs d'anneau formant la première paroi de la source de fluide constituée par le canal 112, et d'assurer un guidage efficace vers les orifices d'injection sans perte de fluide.

## Revendications

1. Canal de transition (10) entre une première section de turbine et une deuxième section de turbine pour moteur à turbine à gaz, comprenant une première paroi (102, 102') radialement extérieure annulaire, une seconde paroi radialement intérieure annulaire, la première paroi comprenant des orifices (102C, 102C') d'injection d'un fluide à l'intérieur du canal pour en ré-énergiser la couche limite, **caractérisé par le fait que** la première paroi (102, 102') est constituée d'éléments en secteurs d'anneau logés à l'intérieur d'une virole annulaire (104, 104'), la virole (104 ; 104') ménageant avec un élément (123) de carter de turbine extérieur à la virole une cavité (110, 110') de distribution de fluide, des moyens d'alimentation en fluide, avec guidage sans fuite dudit fluide, étant ménagés entre la dite cavité de distribution de fluide (110, 110') et les dits orifices d'injection (102C, 102C').

2. Canal de transition selon la revendication précédente, dont les moyens d'alimentation comprennent des ouvertures (104B) ménagées dans la virole annulaire (104), des cavités (102B) ménagées dans les secteurs d'anneau formant la première paroi (102,) et communiquant avec les orifices d'injection (102C), et des tubes de liaison (106) rapportés entre les dites ouvertures et les dites cavités.

3. Canal de transition selon la revendication 1, dont les moyens d'alimentation comprennent des ouvertures (104B') ménagées dans la virole annulaire (104'), des cavités (102B') ménagées dans les secteurs d'anneau formant la première paroi (102') et communiquant avec les orifices d'injection (102C'), et un canal annulaire, délimité par des joints annulaires d'étanchéité (102'F, 102'G), ménagé entre les ouvertures (104B') et les cavités (102B') et les mettant en communication.

4. Canal de transition selon l'une des revendications précédentes dont les orifices (102C) d'injection de fluide dans les éléments en secteurs d'anneau sont obtenus par usinage des secteurs d'anneau.

5. Canal de transition selon l'une des revendications 1 à 3 dont les orifices (102C') d'injection de fluide sont définis entre des ouvertures (102B') usinées dans les secteurs d'anneau formant la première paroi (110') et des éléments (102C") de guide rapportés sur lesdits secteurs.

6. Canal de transition selon l'une des revendications 1 à 5 dont les orifices (102C ; 102C') d'injection sont agencés pour imprimer une composante de vitesse tangentielle, dans le plan transversal à l'axe du moteur, au fluide.

7. Moteur à turbine à gaz comprenant une première section de turbine et une deuxième section de turbine reliées par un canal de transition (10) selon l'une des revendications précédentes, ledit élément (123) de carter comprenant un orifice (123B) d'alimentation en fluide communiquant (112) avec une zone de prélèvement en amont du canal de transition.

8. Moteur à turbine à gaz selon la revendication précédente dont le dit prélèvement en amont du canal de transition est effectué au niveau du compresseur du moteur, l'air prélevé formant un film froid protégeant la première paroi.

9. Moteur à turbine à gaz selon la revendication 8 dont les secteurs d'anneau, formant la première paroi (102, 102') radialement extérieure annulaire du canal (10) de transition, sont rapportés sur les éléments formant le distributeur (14) en entrée de la deuxième section de turbine.

10. Moteur à turbine à gaz selon la revendication précédente dont les dits secteurs d'anneau formant la première paroi (102, 102') constituent des pièces monoblocs avec les éléments du distributeur (14).

## Claims

1. A transition channel (10) between a first turbine section and a second turbine section for a gas turbine engine, comprising a first radially external annular wall (102, 102'), a second radially internal annular wall, the first wall comprising orifices (102C, 102C') for injecting a fluid into the channel in order to re-energize its boundary layer, **characterized by** the fact that the first wall (102, 102') consists of ring sector elements housed inside an annular ring (104, 104'), the annular ring (104 ; 104') forming with an element (123) of the turbine casing external to the ring a cavity (110, 110') for distributing fluid, fluid supply means guiding said fluid without leakage being arranged between said cavity for distributing fluid (110, 110') the space outside the ring and said injection orifices (102C, 102C').

2. The transition channel as claimed in the preceding claim wherein the supply means comprise openings (104B) arranged in the annular ring (104), cavities (102B) arranged in the ring sectors forming the first wall (102) and communicating with the injection orifices (102C), and connecting tubes (106) fitted between said openings and said cavities.

3. The transition channel as claimed in claim 1, wherein the supply means comprise openings (104B') arranged in the annular ring (104'), cavities (102B') arranged in the ring sectors forming the first wall (102') and communicating with the injection orifices (102C'), and an annular channel, delimited by annular seals (102'F, 102'G), arranged between the openings (104B') and the cavities (102B') and placing them in communication.

4. The transition channel as claimed in one of the preceding claims, wherein the orifices (102C) for injecting fluid into the ring sector elements are obtained by machining the ring sectors.

5. The transition channel as claimed in one of claims 1 to 3, wherein the fluid injection orifices (102C') are defined between openings (102B') machined in the ring sectors forming the first wall (102') and guide elements(102C") fitted to said sectors.

6. The transition channel as claimed in one of claims 1 to 5, wherein the injection orifices (102C ; 102C') are arranged in order to impart a tangential speed component, in the plane transversal to the axis of the engine, to the fluid.

7. A gas turbine engine comprising a first turbine section and a second turbine section connected by a transition channel (10) as claimed in one of the preceding claims, wherein said casing element (123) comprising a fluid supply orifice (123B) communicating (112) with a bleed zone upstream of the transition channel.

8. Gas turbine engine as claimed in the preceding claim wherein said bleed upstream of the transition channel is carried out at the compressor of the engine, the bled air forming a cold film protecting the first wall.

9. The gas turbine engine as claimed in claim 8 wherein the ring sectors, forming the first radially external annular wall (102, 102') of the transition channel (10), are fitted to the elements forming the distributor (14) at the entrance to the second turbine section.

10. The gas turbine engine as claimed in the preceding claim wherein said ring sectors forming the first wall (102, 102') constitute monobloc parts with the elements of the distributor (14).

## Patentansprüche

1. Übergangskanal (10) zwischen einem ersten Turbinenabschnitt und einem zweiten Turbinenabschnitt bei Gasturbinen-Triebwerken, welcher eine erste ringförmige, radial äußere Wand (102, 102'), eine zweite ringförmige, radial innere Wand aufweist, wobei die erste Wand Öffnungen (102C, 102C') zum Einspritzen eines Fluids ins Innere des Kanals aufweist, um darin die Grenzschicht wieder kräftiger zu machen,
**dadurch gekennzeichnet,**
**dass** die erste Wand (102, 102') aus Ringsektor-Elementen gebildet ist, die im Inneren eines Ringbandes (104, 104') Aufnahme finden, wobei das Ringband (104, 104') mit einem Element (123) des Turbinengehäuses, das sich außerhalb des Ringbandes befindet, einen Hohlraum (110, 110') zur Abgabe von Fluid bildet, wobei zwischen diesem Fluidabgabe- Hohlraum (110, 110') und den genannten Einspritzöffnungen (102C, 102C') Mittel zur Zuführung von Fluid mit verlustfreier Führung dieses Fluids ausgeführt sind.

2. Übergangskanal nach dem vorherigen Anspruch, wobei dessen Zuführungsmittel Öffnungen (104B) umfassen, die in dem Ringband (104) ausgeführt sind, sowie Hohlräume (102B), die in den Ringsektoren ausgeführt sind, die die erste Wand (102) bilden, und mit den Einspritzöffnungen (102C) kommunizieren, sowie Verbindungsrohre (106), die zwischen den genannten Öffnungen und den genannten Hohlräumen sitzen.

3. Übergangskanal nach Anspruch 1, wobei dessen Zuführungsmittel Öffnungen (104B') umfassen, die in dem Ringband (104') ausgeführt sind, sowie Hohlräume (102B'), die in den Ringsektoren ausgeführt sind, die die erste Wand (102') bilden, und mit den Einspritzöffnungen (102C') kommunizieren, sowie einen ringförmigen Kanal, der durch ringförmige Dichtungen (102'F, 102'G) umgrenzt ist und zwischen den Öffnungen (104B') und den Hohlräumen (102B') ausgeführt ist und diese miteinander in Verbindung setzt.

4. Übergangskanal nach einem der vorherigen Ansprüche, wobei die Öffnungen (102C) zum Einspritzen von Fluid in die Ringsektor-Elemente durch Bearbeitung der Ringsektoren hergestellt werden.

5. Übergangskanal nach einem der Ansprüche 1 bis 3, wobei die Öffnungen (102C') zum Einspritzen von Fluid zwischen Öffnungen (102B'), die in den Ringsektoren ausgebildet sind, die die erste Wand (102') bilden, und Führungselementen (102C"), die an diesen Sektoren angebracht sind, gebildet sind.

6. Übergangskanal nach einem der Ansprüche 1 bis 5, wobei die Einspritzöffnungen (102C, 102C') so ausgeführt sind, dass sie dem Fluid eine in der quer zur Achse des Triebwerks liegenden Ebene tangentiale Geschwindigkeitskomponente verleihen.

7. Gasturbinentriebwerk mit einem ersten Turbinenabschnitt und einem zweiten Turbinenabschnitt, die durch einen Übergangskanal (10) nach einem der vorherigen Ansprüche miteinander verbunden sind, wobei das Gehäuseelement (123) eine Öffnung (123B) zur Zuführung von Fluid aufweist, die mit einem vor dem Übergangskanal befindlichen Entnahmebereich kommuniziert (112).

8. Gasturbinentriebwerk nach einem der vorherigen Ansprüche, wobei die genannte Entnahme vor dem Übergangskanal im Bereich des Verdichters des Triebwerks erfolgt, wobei die entnommene Luft eine kalte Schicht bildet, die die erste Wand schützt.

9. Gasturbinentriebwerk nach Anspruch 8, bei dem die Ringsektoren, die die erste ringförmige, radial äußere Wand (102, 102') des Übergangskanals (10) bilden, an die Elemente angefügt sind, die den Leitapparat (14) am Eintritt des zweiten Turbinenabschnitts bilden.

10. Gasturbinentriebwerk nach dem vorherigen Anspruch, bei dem die genannten Ringsektoren, die die erste Wand (102, 102') bilden, mit den Elementen des Leitapparats (14) zusammen einstückige Werkstücke bilden.
